# EUROPÄISCHE PATENTANMELDUNG

(11) **EP 2 648 169 A2**
(43) Veröffentlichungstag der Anmeldung: **09.10.2013**
(21) Anmeldenummer: 13154616.0
(22) Anmeldetag: 08.02.2013
(51) Int. Cl.: G08B 13/196

(54) **Verfahren zum Überwachen eines Objekts sowie Verwendung eines Sensors zum Überwachen eines Objekts**

(30) Priorität: 05.04.2012 DE 102012205663
(71) Anmelder: ROBERT BOSCH GMBH, 70442 Stuttgart (DE)
(72) Erfinder: Braeuchle, Christian, 74855 Hassmersheim - Hochhausen (DE)

(57) **Zusammenfassung**

Die Erfindung betrifft ein Verfahren zum Überwachen eines Objekts (1), insbesondere zum Überwachen einer Immobilie (1), wobei durch einen Sensor (30) eines Fahrzeugs (3), insbesondere einen Sensor (30) eines Kraftfahrzeugs (3), das vom Fahrzeug (3) verschiedene Objekt (1) selbst und/oder eine Umgebung (2) des vom Fahrzeug (3) verschiedenen Objekts (1) überwacht wird.

Ferner betrifft die Erfindung eine Verwendung eines Sensors (30) zum Überwachen eines Objekts (1), insbesondere zum Überwachen einer Immobilie (1), wobei der Sensor (30) ein Sensor (30) eines Fahrzeugs (3), insbesondere eines Kraftfahrzeugs (3), ist, und das zu überwachende Objekt (1) vom Fahrzeug (3) verschieden ist.

Des Weiteren betrifft die Erfindung einen Sensor (30), eine Sensorik (30), eine Alarmanlage oder ein Fahrzeug (3), insbesondere Kraftfahrzeug, wobei mittels des Sensors (30), der Sensorik (30), der Alarmanlage bzw. des Fahrzeugs (2) ein erfindungsgemäßes Verfahren durchführbar ist, oder der Sensor (30), die Sensorik (30), die Alarmanlage bzw. das Fahrzeug (2) erfindungsgemäß verwendet ist.

## Beschreibung

Die Erfindung betrifft ein Verfahren zum Überwachen eines Objekts, insbesondere zum Überwachen einer Immobilie. Ferner betrifft die Erfindung eine Verwendung eines Sensors zum Überwachen eines Objekts, insbesondere zum Überwachen einer Immobilie. Darüber hinaus betrifft die Erfindung einen Sensor, eine Sensorik, eine Alarmanlage oder ein Fahrzeug, insbesondere ein Kraftfahrzeug.

### Stand der Technik

Kraftfahrzeuge werden zunehmend mit Sensoren für ein Erfassen, also ein Sensieren oder Detektieren, eines Umfelds des Kraftfahrzeugs ausgerüstet, damit verschiedenartige Fahrerassistenzfunktionen realisierbar sind. Eine solche Fahrzeugsensorik gehört in immer mehr Kraftfahrzeugen zu einer Serienausstattung. Solche für die Fahrzeugsensorik geeignete Sensoren sind z. B. Radar-, Video-, Laser- oder Ultraschallsensoren. Ferner werden im Stand der Technik unter dem Begriff Car-to-X Kommunikation Verfahren zusammengefasst, durch welche ein Datenaustausch zwischen Kraftfahrzeugen untereinander oder zwischen einem Kraftfahrzeug und einer anderen Empfangs-/Sendestelle beschrieben wird. - Des Weiteren dienen im Stand der Technik Bewegungssensoren und/oder Videokameras an und in Gebäuden zur Objektsicherung, um diese zu überwachen und vor Einbrüchen, Beschädigungen etc. zu schützen.

### Aufgabenstellung

Es ist eine Aufgabe der Erfindung, mittels eines Fahrzeugs, insbesondere mittels eines Kraftfahrzeugs, einen Mehrwert für einen Inhaber oder Benutzer des Fahrzeugs derart zu schaffen, dass das Fahrzeug auch in einer Ruhephase eine sinnvolle Funktion erfüllen kann und nicht nur lediglich steht und dabei keinen Mehrwert besitzt. Ferner ist es eine Aufgabe der Erfindung, ein verbessertes Verfahren zum Überwachen eines Objekts, insbesondere ein verbessertes Verfahren zum Überwachen einer Immobilie anzugeben. Des Weiteren ist es eine Aufgabe der Erfindung, eine verbesserte Immobilien-Alarmanlage mit wenigstens einem Sensor, sowie einen Sensor, eine Sensorik, eine Alarmanlage oder ein Fahrzeug, insbesondere ein Kraftfahrzeug, zur Verfügung zu stellen.

### Offenbarung der Erfindung

Die Aufgabe der Erfindung wird durch ein Verfahren zum Überwachen eines Objekts, insbesondere zum Überwachen einer Immobilie, gemäß Anspruch 1; durch eine Verwendung eines Sensors zum Überwachen eines Objekts, insbesondere zum Überwachen einer Immobilie, gemäß Anspruch 2; mittels einer Immobilien-Alarmanlage mit wenigstens einem Sensor, gemäß Anspruch 11; und mittels einem Sensor, einer Sensorik, einer Alarmanlage oder einem Fahrzeug, insbesondere einem Kraftfahrzeug, gemäß Anspruch 12 gelöst. Vorteilhafte Weiterbildungen, zusätzliche Merkmale und/oder Vorteile der Erfindung ergeben sich aus den abhängigen Ansprüchen und der folgenden Beschreibung.

Bei dem erfindungsgemäßen Verfahren zum Überwachen des Objekts wird durch einen Sensor eines Fahrzeugs, insbesondere einen Sensor eines Kraftfahrzeugs, das vom Fahrzeug verschiedene Objekt selbst und/oder eine Umgebung des vom Fahrzeug verschiedenen Objekts überwacht. Bei der erfindungsgemäßen Verwendung eines Sensors zum Überwachen des Objekts, ist der Sensor ein Sensor eines Fahrzeugs, insbesondere eines Kraftfahrzeugs, wobei das zu überwachende Objekt vom Fahrzeug verschieden ist. Die erfindungsgemäße Immobilien-Alarmanlage ist derart eingerichtet, dass ein Sensor eines Fahrzeugs wenigstens zeitweise als ein Sensor der Immobilien-Alarmanlage fungieren kann. Ferner ist mittels des Sensors, der Sensorik, der Alarmanlage oder des Fahrzeugs, ein erfindungsgemäßes Verfahren durchführbar, bzw. der Sensor, die Sensorik, die Alarmanlage bzw. das Fahrzeug ist erfindungsgemäß verwendbar.

Ein Kern der Erfindung ist eine Nutzung einer Umfeldssensorik eines Fahrzeugs zur Überwachung eines oder einer Mehrzahl bestimmter Bereiche eines Objekts, beispielsweise einem Gebäude, einem Eigenheim etc. Ein Vorteil liegt in der Nutzung des Fahrzeugs während dessen Standphasen und in einer kostengünstigen Realisierung einer Alarmanlage, insbesondere einer Hausalarmanlage, unter Verwendung der Fahrzeugsensorik. Gemäß der Erfindung ist allgemein ein beliebiges festgelegtes, stehendes oder auch sich bewegendes Objekt von einem oder einer Mehrzahl von Fahrzeugen, ggf. im Zusammenwirken mit einer gegenüber dem oder den Fahrzeugen externen Anlage, wie einer Alarmanlage, überwachbar. Insbesondere ist eine bereits bestehende Anlage durch den oder die geeigneten Sensoren der Fahrzeugsensorik erweiterbar.

Hierbei kann das Fahrzeug beispielsweise in einer Parkbucht abgestellt sein und die betreffende Immobilie bzw. die betreffenden Immobilien mittels Umfeldssensorik des Fahrzeugs überwacht werden. Ferner kann sich das Fahrzeug in einer Garage, einem Car-Port etc., also in dem zu überwachenden Objekt selbst befinden. Hierbei erfolgt keine Einschränkung der Systemeigenschaften, die Fahrzeugsensorik kann weiterhin als ein Bewegungsmelder oder eine Alarmeinrichtung verwendet werden.

Erfindungsgemäß soll unter einem Sensor auch ein Detektor verstanden werden können. Ferner kann statt dem Sensor eine Sensorik oder ein Teil der Sensorik des Fahrzeugs zum Einsatz kommen, wobei die Sensorik eine Mehrzahl von Sensoren und/oder Detektoren umfassen kann. Hierbei können eine Mehrzahl von Sensoren oder Detektoren der Sensorik, Sensoren bzw. Detektoren sein, die mit gleichen, ähnlichen oder unterschiedlichen Prinzipien arbeiten. Darüber hinaus kann unter einem Sensor ein Gerät oder eine Einrichtung verstanden werden, der eine diesem entsprechende Einrichtung oder Vorrichtung zum Auswerten eines Signals und/oder zum Ausgeben eines Reaktionsmusters aufweist.

Gemäß der Erfindung erfolgt das Überwachen des Objekts und/oder das Überwachen der Umgebung des Objekts bevorzugt bei stillstehendem und/oder stillgelegtem Fahrzeug, wobei sich das Fahrzeug (Elektro- oder Hybridfahrzeug) z. B. in/an einer Ladestation befinden kann. Der Sensor selbst und/oder eine Aufhängung des Sensors am/im Fahrzeug kann dergestalt eingerichtet sein, dass der Sensor auf das Objekt und/oder die Umgebung des Objekts derart ausrichtbar ist, dass das Objekt und/oder die Umgebung des Objekts sensierbar ist. Gemäß der Erfindung ist das Objekt selbst unmittelbar und/oder eine unmittelbare und/oder eine mittelbare Umgebung des Objekts überwachbar. Bevorzugt ist ein Zugangsbereich zum Objekt, insbesondere eine Straße, ein Weg oder ein Garten, und/oder bevorzugt ein Eingangsbereich des Objekts, insbesondere eine Tür, ein Fenster und/oder ein Schacht, überwachbar.

Bei einem Sensieren bzw. Detektieren einer Auffälligkeit kann, ggf. nach einem Filtern, ein aktives und/oder passives Reaktionsmuster ausgegeben werden bzw. folgen. Das Reaktionsmuster besteht bevorzugt in einem Alarm, einer Aufzeichnung und/oder einer Benachrichtigung, wobei ein Licht, eine Hupe, ein Motor, eine Kamera, eine Aufzeichnungseinrichtung und/oder eine Alarmanlage des Fahrzeugs oder einer Immobilie in Betrieb genommen wird. Das, ggf. aufbereitete, Signal des Sensors des Fahrzeugs kann einer gegenüber dem Fahrzeug externen Einrichtung, insbesondere einer externen Alarmanlage, zur Verfügung gestellt werden. Hierbei kann das Signal des Sensors des Fahrzeugs als einziges oder ein zusätzliches Sensorsignal für die externe Einrichtung, insbesondere die externen Alarmanlage, dienen.

In Ausführungsformen der Erfindung kann das Fahrzeug als ein Bewegungsmelder fungieren, wobei bei einer sensierten oder detektierten Bewegung ein Licht, insbesondere ein Scheinwerfer, des Fahrzeugs und/oder eine Warneinrichtung aktiviert wird. Bei einem Vorhandensein einer Verbindung zu einer Empfangsstelle kann bei der sensierten oder detektierten Bewegung ein Signal zur Empfangsstelle gesendet werden, anhand welchem ein bezüglich des Fahrzeugs externes Reaktionsmuster gesteuert wird. Ferner kann mittels einer Videosensorik des Fahrzeugs ein Videosignal an eine Empfangsstelle, insbesondere eine Empfangsstelle innerhalb des Objekts übermittelt werden, wobei das Videosignal bevorzugt auf einem Monitor in Echtzeit angezeigt werden kann.

Eine Funktionsweise als Bewegungsmelder, auch innerhalb einer Garage etc., kann in einer Ausprägung der Erfindung zusätzlich oder auch stattdessen als "Komfortfunktion" und nicht (nur) als eine Alarm- oder Warneinrichtung verwendet werden. Beispielsweise kann die Außenbeleuchtung vergleichbar mit einem handelsüblichen Bewegungsmelder angesteuert werden. Alternativ kann auch eine Beleuchtungseinrichtung des Fahrzeugs angesteuert werden, um einen bestimmten Bereich auszuleuchten.

Gemäß der Erfindung kann der Sensor ein Umfeldsensor bzw. ein Umfelddetektor des Fahrzeugs sein, wobei der Umfeldsensor bzw. der Umfelddetektor bevorzugt ein Bewegungssensor, ein Bewegungsmelder, ein IR-Sensor, ein Brandsensor, ein Radarsensor, ein Regensensor, ein Beschleunigungssensor, eine Videokamera, ein Lasersensor und/oder ein Ultraschallsensor ist. Ferner können erfindungsgemäß eine Mehrzahl von Sensoren eines einzelnen Fahrzeugs und/oder eine Mehrzahl von Fahrzeugen zum Überwachen des Objekts und/oder zum Überwachen der Umgebung des Objekts eingesetzt werden.

### Kurzbeschreibung der Figuren

Die Erfindung wird im Folgenden anhand von Ausführungsbeispielen unter Bezugnahme auf die einzige beigefügte Figur näher erläutert. Diese Figur zeigt in einer Draufsicht einen Zu- und Eingangsbereich einer Immobilie, welcher bzw. welche gemäß der Erfindung von einem Sensor oder einer Sensorik eines Fahrzeugs, insbesondere eines Kraftfahrzeugs, überwacht werden kann bzw. können.

### Ausführungsformen der Erfindung

Die im Folgenden erläuterten Ausführungsformen der Erfindung betreffen die Überwachung und/oder Sicherung einer Immobilie bzw. eines Gebäudes durch ein Kraftfahrzeug. Die Erfindung ist jedoch nicht auf die Überwachung bzw. Sicherung von Immobilien beschränkt, sondern kann ganz allgemein auf Objekte angewendet werden. So ist es beispielsweise möglich, eine beliebige Lokalität, wie einen Platz, einen Garten etc., aber z. B. auch ein sich gerade in einem bestimmten Bereich aufhaltendes Objekt, wie ein auf einem Spielplatz weilendes Kind, gemäß der Erfindung zu überwachen. Ferner soll unter dem Begriff Überwachen auch der Begriff Sichern mitumfasst sein.

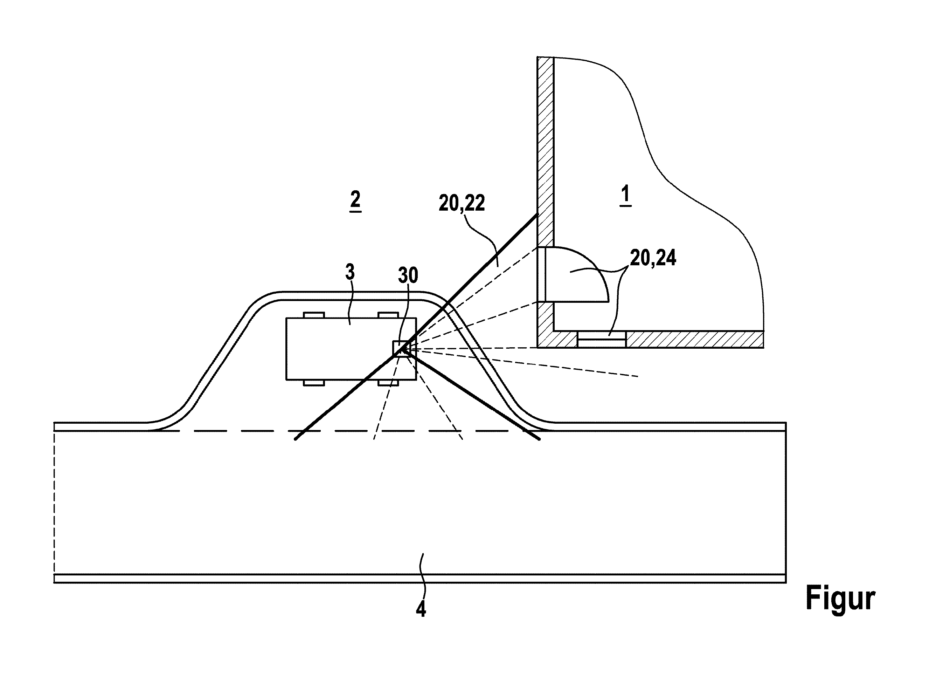

Die Figur zeigt ein in einer Parkbucht neben einem Weg 4 oder einer Straße 4 abgestelltes Fahrzeug 3, insbesondere ein Kraftfahrzeug 3, das zur Überwachung und/oder Sicherung eines Objekts 1, insbesondere einer Immobilie 1 bzw. einem Gebäude 1, eingesetzt wird. Hierfür überwacht das Kraftfahrzeug 3 eine bevorzugt unmittelbare Umgebung 2 des Objekts 1 und/oder das Objekt 1 selbst und/oder eine Umgebung des Kraftfahrzeugs 3. Eine Überwachung des Objekts 1 durch das Kraftfahrzeug 3 erfolgt dabei mittels eines im/am Kraftfahrzeug 3 verbauten bzw. vorgesehenen Sensors 30 bzw. Detektors 30, insbesondere eines Umfeldsensors 30 bzw. eines Umfelddetektors 30, der ein Teil einer Sensorik des Kraftfahrzeugs 3 sein kann. Der Sensor 30 bzw. Detektor 30 kann z. B. ein Bewegungssensor 30, ein Bewegungsmelder 30, ein IR-Sensor 30, ein Brandsensor 30, ein Radarsensor 30, ein Regensensor 30, ein Beschleunigungssensor 30, eine Videokamera 30, ein Lasersensor 30, ein Ultraschallsensor 30 etc. sein.

Gemäß der Erfindung erfolgt eine Sensierung bzw. Detektierung für das Objekt 1 selbst, d. h. es wird die Umgebung 2; 20, 22, 24 des Objekts 1 sensiert und nicht die für das Fahrzeug selbst relevante Umgebung. Es erfolgt also eine Sensierung bzw. Detektierung einer relevanten Objektumgebung 20, 22, 24. Die relevante Objektumgebung 20, 22, 24 ergibt sich aus einem Interesse desjenigen, der das Objekt 1 überwachen bzw. schützen will, wobei die relevante Objektumgebung 20, 22, 24 von der relevanten Fahrzeugumgebung zu unterscheiden ist. Die relevante Fahrzeugumgebung, liegt im Interesse desjenigen, der das Fahrzeug in dessen Betrieb steuert, wobei sich die relevante Fahrzeugumgebung, in Bezug z. B. auf eine Karte ständig ändert und im Wesentlichen die wechselnden Bereiche örtlich vor und hinter dem Fahrzeug betrifft. Die relevante Objektumgebung 20, 22, 24 hingegen ist orts- bzw. an das Objekt 1 gebunden und kann ggf. in einer Karte eingetragen werden.

Die relevante Objektumgebung 20 ist bevorzugt eine unmittelbare 24 und/oder mittelbare Umgebung 22 des Objekts 1, wobei die mittelbare Umgebung 22 des Objekts 1 z. B. ein Zugangsbereich, wie die Straße 4, der Weg 4 oder ein Garten bei dem Objekt 1 sein kann. Die unmittelbare Umgebung 24 des Objekts 1 ist z. B. ein Eingangsbereich des Objekts 1, wie eine Tür, ein Fenster oder ein Schacht des Objekts 1. Ferner soll unter der unmittelbaren Umgebung 24 des Objekts 1, das Objekt 1 selbst verstanden werden, also im Wesentlichen dessen äußere Begrenzung.

Hierbei kann durch das Fahrzeug 3 in Alleinstellung eine Überwachung des Objekts 1 erfolgen, oder das Fahrzeug 3 kann mit einer Einrichtung des Objekts 1, insbesondere einer Alarmanlage des Objekts 1, kooperieren, wobei der Sensor 30 bzw. die Sensoren 30 (Sensorik) des Fahrzeugs 3 mit der Einrichtung des Objekts 1 kooperieren. Hierbei stellt das Fahrzeug 3 bzw. der betreffende Sensor 30 der Einrichtung des Objekts 1 ein Signal zur Verfügung. Das Signal des betreffenden Sensors 30 kann ggf. gefiltert und/oder aufbereitet sein, wobei das Signal an die internen Gegebenheiten der Einrichtung des Objekts 1, also insbesondere an die Alarmanlage, angepasst sein kann.

Im Folgenden werden bevorzugte Ausprägungen einer Überwachung mittels eines Fahrzeugs 3 bzw. mittels eines Sensors 30 bzw. einer Sensorik des Fahrzeugs 3 näher erläutert. Die Erfindung ist jedoch nicht auf solche Ausführungsformen beschränkt, sondern kann selbstverständlich eine Vielzahl anderer Ausprägungen annehmen. - So ist es z. B. möglich, dass das Fahrzeug 3 als ein Bewegungsmelder, beispielsweise in einem privaten Hinterhof (Objekt 1) bzw. einem Gebäude daran (Objekt 1), fungiert. Bei einer detektierten Bewegung, z. B. durch einen IR- 30 oder einen Radarsensor 30, kann beispielsweise ein Scheinwerfer des Fahrzeugs 3, ähnlich einer Außenleuchte mit einem Bewegungsmelder, oder eine Warneinrichtung, ggf. zusammen mit einer Warneinrichtung einer Alarmanlage des betreffenden Gebäudes, in Betrieb genommen werden. Dies kann entsprechend einer Umgebungshelligkeit eines Standorts des Fahrzeugs erfolgen (Tag., Nacht, Garage, Carport etc.).

Dies kann ferner durch eine Datenverbindung (Car-to-X Schnittstelle einer Car-to-X Kommunikation) an das zu überwachende Objekt 1, also an das am Hinterhof befindliche Gebäude, oder an eine zentrale Erfassungsstelle für eine Überwachung einer Mehrzahl von Gebäuden erweitert sein. Hierbei kann an eine Empfangsstelle, z. B. innerhalb des Gebäudes oder in der zentralen Erfassungsstelle, gemeldet werden, dass eine Bewegung erkannt wurde. - Verfügt das Fahrzeug 3 über eine Videosensorik, so kann ein Videosignal an die Empfangsstelle, beispielsweise in dem zu überwachenden Objekt 1, übermittelt werden und z. B. auf einem Monitor in Echtzeit angezeigt werden. Für eine Überwachung bei schlechten Lichtverhältnissen oder in der Dämmerung oder Nacht, eignet sich eine IR-Kamera. - Gemäß der Erfindung ist es möglich, entsprechend der vorhergehend erläuterten Beispiele eine Koppelung mehrerer Fahrzeuge 3 und/oder einer bereits vorhandenen Sensorik, z. B. einer Hausalarmanlage, zu realisieren.

Im Allgemeinen ist es möglich, einen Daten- und/oder Signalaustausch durch die Car-to-X Kommunikation zu realisieren. Darüber hinaus sind natürlich eine Vielzahl anderer Möglichkeiten denkbar dies mittels Datenübertragungseinrichtungen zu realisieren. So ist es z. B. möglich, dies über ein Mobilfunknetz, eine Internetanbindung, Cloud-Computing, LTE-Netze (Long Term Evolution) etc. zu realisieren. Ferner besteht die Möglichkeit einer kabelgebundenen Kommunikation, welche typischerweise nicht unter den Begriff Car-to-X fällt. Dies kann sowohl durch einen separaten Anschluss realisiert sein, als auch in Kombination mit der Anbindung selbst, wie sie beispielsweise für das Laden eines Elektrofahrzugs, eines Hybridfahrzeugs etc. ohnehin besteht.

## Patentansprüche

1. Verfahren zum Überwachen eines Objekts (1), insbesondere zum Überwachen einer Immobilie (1), **dadurch gekennzeichnet, dass**
durch einen Sensor (30) eines Fahrzeugs (3), insbesondere einen Sensor (30) eines Kraftfahrzeugs (3),
das vom Fahrzeug (3) verschiedene Objekt (1) selbst und/oder eine Umgebung (2) des vom Fahrzeug (3) verschiedenen Objekts (1) überwacht wird.

2. Verwendung eines Sensors (30) zum Überwachen eines Objekts (1), insbesondere zum Überwachen einer Immobilie (1), **dadurch gekennzeichnet, dass**
der Sensor (30) ein Sensor (30) eines Fahrzeugs (3), insbesondere eines Kraftfahrzeugs (3), ist, und das zu überwachende Objekt (1) vom Fahrzeug (3) verschieden ist.

3. Überwachungsverfahren oder Verwendung gemäß einem der vorhergehenden Ansprüche, **dadurch gekennzeichnet, dass** das Überwachen des Objekts (1) und/oder das Überwachen der Umgebung (2) des Objekts (1) bei stillstehendem und/oder stillgelegtem Fahrzeug (3) erfolgt, und
der Sensor (30) selbst und/oder eine Aufhängung des Sensors (30) am/im Fahrzeug (3) bevorzugt derart eingerichtet ist, dass der Sensor (30) auf das Objekt (1) und/oder die Umgebung (2) des Objekts (1) derart ausrichtbar ist, dass das Objekt (1) und/oder die Umgebung (2) des Objekts (1) sensierbar ist.

4. Überwachungsverfahren oder Verwendung gemäß einem der vorhergehenden Ansprüche, **dadurch gekennzeichnet, dass** das Objekt (1) selbst unmittelbar und/oder eine unmittelbare und/oder eine mittelbare Umgebung (20) des Objekts (1) überwacht wird, wobei
insbesondere ein Zugangsbereich (22) zum Objekt (1), bevorzugt eine Straße (22), ein Weg (22) oder ein Garten (22), und/oder insbesondere ein Eingangsbereich (24) des Objekts (1), bevorzugt eine Tür (24), ein Fenster (24) und/oder ein Schacht (24), überwacht wird.

5. Überwachungsverfahren oder Verwendung gemäß einem der vorhergehenden Ansprüche, **dadurch gekennzeichnet, dass** bei einem Sensieren bzw. einem Detektieren einer Auffälligkeit, ggf. nach einem Filtern, ein aktives und/oder passives Reaktionsmuster ausgegeben wird bzw. folgt, und
das Reaktionsmuster bevorzugt in einem Alarm, einer Aufzeichnung und/oder einer Benachrichtigung besteht, wobei ein Licht, eine Hupe, ein Motor, eine Kamera, eine Aufzeichnungseinrichtung oder eine Alarmanlage des Fahrzeugs (3) in Betrieb genommen wird.

6. Überwachungsverfahren oder Verwendung gemäß einem der vorhergehenden Ansprüche, **dadurch gekennzeichnet, dass** ein, ggf. aufbereitetes, Signal des Sensors (30) des Fahrzeugs (3) einer gegenüber dem Fahrzeug (3) externen Einrichtung, insbesondere einer externen Alarmanlage, zur Verfügung gestellt wird, wobei
das Signal des Sensors (30) des Fahrzeugs (3) als einziges oder ein zusätzliches Sensorsignal der externen Einrichtung, insbesondere der externen Alarmanlage, dient.

7. Überwachungsverfahren oder Verwendung gemäß einem der vorhergehenden Ansprüche, **dadurch gekennzeichnet, dass** das Fahrzeug (3) als ein Bewegungsmelder fungiert, wobei bei einer sensierten oder detektierten Bewegung ein Licht, insbesondere ein Scheinwerfer, des Fahrzeugs (3) und/oder eine Warneinrichtung aktiviert wird, und/oder
bei Vorhandensein einer Verbindung zu einer Empfangsstelle, bei der sensierten oder detektierten Bewegung bevorzugt ein Signal zur Empfangsstelle gesendet wird, anhand welchem ein bezüglich des Fahrzeugs (3) externes Reaktionsmuster gesteuert wird, und/oder
mittels einer Videosensorik des Fahrzeugs (3) ein Videosignal an eine Empfangsstelle, insbesondere eine Empfangsstelle innerhalb des Objekts (1) übermittelbar ist, und das Videosignal bevorzugt auf einem Monitor in Echtzeit angezeigt wird.

8. Überwachungsverfahren oder Verwendung gemäß einem der vorhergehenden Ansprüche, **dadurch gekennzeichnet, dass** der Sensor (30) ein Umfeldsensor (30) bzw. ein Umfelddetektor (30) des Fahrzeugs (3) ist, wobei der Umfeldsensor (30) bzw. der Umfelddetektor (30) bevorzugt
ein Bewegungssensor (30), ein Bewegungsmelder (30), ein IR-Sensor (30), ein Brandsensor (30), ein Radarsensor (30), ein Regensensor (30), ein Beschleunigungssensor (30), eine Videokamera (30), ein Lasersensor (30) oder ein Ultraschallsensor (30) ist.

9. Überwachungsverfahren oder Verwendung gemäß einem der vorhergehenden Ansprüche, **dadurch gekennzeichnet, dass** eine Mehrzahl von Sensoren (30) eines einzelnen Fahrzeugs (1) und/oder eine Mehrzahl von Fahrzeugen (1) zum Überwachen des Objekts (1) und/oder zum Überwachen der Umgebung (2) des Objekts (1) eingesetzt werden.

10. Überwachungsverfahren oder Verwendung gemäß einem der vorhergehenden Ansprüche, **dadurch gekennzeichnet, dass:**
• der Sensor (30) ein Detektor (30) ist;
• statt dem Sensor (30) eine Sensorik (30) des Fahrzeugs (3) zum Einsatz kommt, wobei die Sensorik (30) eine Mehrzahl von Sensoren (30) und/oder Detektoren (30) umfasst;
• eine Mehrzahl von Sensoren (30) oder Detektoren (30) der Sensorik (30) Sensoren (30) bzw. Detektoren (30) sind, die mit gleichen, ähnlichen oder unterschiedlichen Prinzipien arbeiten; und/oder
• einem Sensor (30) eine diesem entsprechende Einrichtung bzw. Vorrichtung zum Auswerten seines Signals aufweist oder zugeordnet ist.

11. Immobilien-Alarmanlage mit wenigstens einem Sensor (30), **dadurch gekennzeichnet, dass**
die Immobilien-Alarmanlage derart eingerichtet ist, dass ein Sensor (30) eines Fahrzeugs (3), insbesondere eines Kraftfahrzeugs (3), zeitweise als ein Sensor (30) der Immobilien-Alarmanlage fungierbar ist.

12. Sensor, Sensorik, Alarmanlage oder Fahrzeug, insbesondere Kraftfahrzeug, **dadurch gekennzeichnet, dass**
mittels des Sensors (30), der Sensorik (30), der Alarmanlage bzw. des Fahrzeugs (2) ein Verfahren nach einem der vorhergehenden Ansprüche durchführbar ist, oder
der Sensor (30), die Sensorik (30), die Alarmanlage bzw. das Fahrzeug (2) nach einem der vorhergehenden Ansprüche verwendet ist.
